# FASCICULE DE BREVET EUROPEEN

(11) **EP 3 377 391 B1**
(45) Date de publication et mention de la délivrance du brevet: **08.01.2020**
(21) Numéro de dépôt: 16805308.0
(22) Date de dépôt: 09.11.2016
(51) Int. Cl.: B62D 31/02

(54) **PROFILE AMELIORE POUR OSSATURE DE VEHICULE TERRESTRE DE TRANSPORT EN COMMUN DE PASSAGERS, OSSATURE ET VEHICULE COMPRENANT UN TEL PROFILE**
VERBESSERTES PROFIL FÜR DIE STRUKTUR EINES LANDFAHRZEUGS FÜR DEN ÖFFENTLICHEN PERSONENVERKEHR, STRUKTUR UND FAHRZEUG MIT SOLCH EINEM PROFIL
IMPROVED PROFILE FOR THE STRUCTURE OF A LAND VEHICLE FOR PUBLIC PASSENGER TRANSPORT, STRUCTURE, AND VEHICLE COMPRISING SUCH A PROFILE

(30) Priorité: 16.11.2015 FR 1560988
(43) Date de publication de la demande: 26.09.2018
(73) Titulaire: Bluebus, 29500 Ergue Gaberic (FR)
(72) Inventeur: BESSON, Patrice, 69970 Marennes (FR); SAUVAGET, Thierry, 69780 Toussieu (FR); DESNEUX, Alexandre, 69720 Saint Laurent de Mure (FR)
(74) Mandataire: IPAZ
(86) Numéro de dépôt international: PCT/EP2016/077121
(87) Numéro de publication internationale: WO 2017/084943

(56) Documents cités:
- DE-A1- 19 903 724
- DE-A1-102006 022 259
- US-A- 3 673 675
- US-A1- 2004 036 266
- US-A1- 2014 021 740

## Description

La présente invention concerne un profilé amélioré pour ossature de véhicule terrestre de transport en commun de passagers, de type bus ou tram-bus. Elle concerne également une ossature comprenant un tel profilé et un véhicule comprenant une telle ossature.

Le domaine de l'invention est le domaine de la construction des véhicules terrestres de transport en commun, notamment électriques, de type bus ou tram-bus.

### Etat de la technique

Les bus actuels sont construits par assemblage de nombreuses pièces formant au final l'ossature du bus qui est l'élément principal du bus. L'une des zones les plus sollicitées d'une ossature se trouve au niveau des coins inférieurs, c'est-à-dire au niveau des jonctions entre la paroi inférieure, ou le plancher, et les parois latérales de l'ossature.

Actuellement, chaque coin inférieur comporte un profilé standard, de section rectangulaire, se prolongeant longitudinalement sur une partie ou la totalité du bus. Il est nécessaire de renforcer ce profilé avec des éléments additionnels pour qu'il résiste aux sollicitations en traction, en compression et en torsion. L'ajout de ces éléments vient augmenter le poids de l'ossature, mais aussi son coût et le temps de production.

Une autre solution consiste à augmenter la taille ou l'épaisseur du profilé, ce qui augmente le poids et le coût de l'ossature. De plus, cela diminue l'espace disponible, au sol, dans l'habitacle du véhicule. Le DE 199 03 724 A1 divulgue une ossature pour un véhicule de type bus comprenant un profilé avec toutes les caractéristiques du préambule de la revendication indépendante 1.

Le DE 10 2006 022259 A1 divulgue une ossature pur bus comprenant un profilé longitudinal inférieur.

Un but de la présente invention est de remédier à ces inconvénients.

Un autre but de l'invention est de proposer un profilé longitudinal pour ossature de véhicule terrestre de transport de passagers plus fonctionnel.

Il est aussi un autre but de l'invention de proposer un profilé longitudinal pour ossature de véhicule terrestre de transport de passagers, permettant d'augmenter l'espace disponible, au sol, dans l'habitacle du véhicule.

Encore un autre but de l'invention est de proposer un profilé longitudinal pour ossature de véhicule terrestre de transport de passagers, permettant de réaliser une ossature plus légère et moins coûteuse, tout en étant aussi robuste, voire plus robuste, que les ossatures de l'état de la technique.

### Exposé de l'invention

L'invention permet d'atteindre au moins l'un des objectifs précités par un profilé pour la fixation d'une paroi inférieure avec une paroi latérale longitudinale d'une ossature d'un véhicule terrestre de transport en commun de passagers, en particulier de type bus ou tram-bus, de section fermée, ledit profilé comprenant :
- une première face pour la fixation de la paroi inférieure, et en particulier au moins un longeron faisant partie de ladite paroi inférieure, et
- une deuxième face pour la fixation de la paroi latérale, et en particulier au moins un montant faisant partie de ladite paroi latérale ;
l'une desdites faces est décalée par rapport à l'autre desdites faces suivant une direction perpendiculaire à ladite une face, de sorte que ladite autre face s'arrête avant, et à distance de, ladite une face suivant ladite direction perpendiculaire.

Ainsi, le profilé selon l'invention permet de fixer l'une des parois latérale et inférieure, en une zone de fixation déportée par rapport à la zone de fixation de l'autre des parois latérales et inférieure, de sorte que la fixation de l'une des parois est moins sujette aux contraintes véhiculées par l'autre des parois.

Plus encore, le profilé selon l'invention permet de fixer l'une des parois latérales et inférieures au niveau d'une zone déportée par rapport au coin inférieur de l'ossature, de sorte que la fixation de l'une des parois est moins sujette aux contraintes s'appliquant au niveau dudit coin qui est une des zones les plus sollicitées par les contraintes.

Le profilé selon l'invention permet, par conséquent, de mieux distribuer les contraintes qui s'appliquent sur le profilé et ainsi d'améliorer la tenue mécanique d'une ossature utilisant un profilé selon l'invention. Par conséquent, pour une même tenue mécanique, il est possible de diminuer le poids et l'épaisseur du profilé selon l'invention, ce qui diminue le poids et le coût d'une ossature utilisant un profilé selon l'invention et augmente l'espace disponible, au sol, dans l'habitacle du véhicule.

Dans une version particulièrement avantageuse du profilé selon l'invention :
- la première face peut être décalée par rapport à la deuxième face suivant une direction perpendiculaire à ladite première face, de sorte que la deuxième face s'arrête avant, et à distance, de ladite première face suivant ladite direction perpendiculaire ; et
- la deuxième face peut être décalée par rapport à la première face suivant une direction perpendiculaire à ladite deuxième face, de sorte que la première face s'arrête avant, et à distance de, ladite deuxième face suivant ladite direction perpendiculaire.

Ainsi, la fixation de la paroi latérale sur le profilé et la fixation de la paroi inférieure sur le profilé sont réalisées au niveau de deux zones de fixation déportées, d'une part, l'une par rapport à l'autre et, d'autre part, par rapport au coin inférieur de l'ossature, ce qui améliore la tenue mécanique de chacune de ces fixations. Par conséquent, pour une même tenue mécanique, il est possible de diminuer encore plus le poids et l'épaisseur du profilé selon l'invention, ce qui diminue encore plus le poids et le coût d'une ossature utilisant un profilé selon l'invention et augmente encore plus l'espace disponible, au sol, dans l'habitacle du véhicule.

Avantageusement, la première face peut être plus grande que la deuxième face. Ainsi, il est possible de fixer audit profilé une paroi inférieure dont la largeur est plus grande que la largeur de la paroi latérale.

En particulier, la première face peut être sensiblement perpendiculaire à la deuxième face.

Le profilé selon l'invention comprend une face, dite intérieure, se trouvant entre ladite première face et ladite deuxième face, et en utilisation, du côté d'un habitacle du véhicule, ladite face intérieure étant recourbée vers l'intérieur dudit profilé.

Ainsi, l'espace disponible, au sol, dans l'habitacle du véhicule est augmenté. De plus, la hauteur disponible entre la paroi inférieure et une paroi supérieure d'une ossature utilisant un profilé selon l'invention, est également augmentée.

Suivant un mode de réalisation particulier, la face intérieure peut rejoindre la première face suivant un angle compris entre 85° et 90°, et en particulier égal à 90°, par rapport à ladite première face.

En outre, la face intérieure peut rejoindre la deuxième face suivant un angle compris entre 85° et 90°, et en particulier égal à 90°, par rapport à ladite deuxième face.

Plus particulièrement, la face intérieure peut comprendre deux parties perpendiculaires entre-elles, en particulier formant entre-elles un « L ».

Dans ce cas,
- l'une desdites parties rejoint la première face et est perpendiculaire à ladite première face et parallèle à la deuxième face, et
- l'autre desdites parties rejoint la deuxième face et est perpendiculaire à ladite deuxième face et parallèle à la première face.

Un tel profilé comportant une face intérieure en « L » permet d'augmenter encore plus, d'une part, la largeur disponible au sol dans l'habitacle et, d'autre part, la hauteur dudit habitacle.

Le profilé selon l'invention peut en outre comprendre une face, dite extérieure, se trouvant entre ladite première face et ladite deuxième face, et en utilisation, du côté extérieur par rapport à un habitacle du véhicule.

Avantageusement, la face extérieure peut former :
- avec la première face, un angle supérieur à 95°, en particulier compris entre 100° et 110°, plus particulièrement égal à 105° ; et/ou
- avec la deuxième face, un angle inférieur à 85°, en particulier compris entre 70° et 80°, plus particulièrement égal à 75°.

Une telle face extérieure peut être recourbée vers le profilé, de sorte que le profilé présente un coin extérieur arrondi et non agressif.

Avantageusement, le profilé selon l'invention, et en particulier la face extérieure, peut comporter une surface de fixation, dite latérale, adjacente à la deuxième face et prévue pour fixer un élément d'habillage de la paroi latérale.

Une telle surface de fixation latérale peut former un décroché dans la face extérieure dudit profilé, vers l'intérieur dudit profilé, ce qui permet de faciliter le montage de l'habillage latéral de l'ossature du véhicule.

Avantageusement, le profilé selon l'invention, et en particulier la face extérieure, peut comporter une surface de fixation, dite inférieure, adjacente à la première face et prévue pour fixer un élément d'habillage de la paroi inférieure.

Une telle surface de fixation inférieure peut former un décroché dans la face extérieure dudit profilé, vers l'intérieur dudit profilé, ce qui permet de faciliter le montage de l'habillage inférieur de l'ossature du véhicule.

Avantageusement, le profilé selon l'invention, et en particulier la face extérieure, peut comporter une surface prévue pour ne pas être recouverte par un élément d'habillage externe du véhicule et rester visible depuis l'extérieur du véhicule.

Une telle surface peut être disposée au niveau d'un coin dudit profilé.

Avantageusement, le profilé selon l'invention peut être creux.

Dans ce cas, la paroi du tube peux présenter une épaisseur comprise entre 1mm et 5mm, et en particulier égale à 3mm.

Le profilé selon l'invention est réalisé par pliage, puis soudage d'une unique feuille de tôle.

Avantageusement, le soudage peut être réalisé sur une surface non visible dudit profilé.

En particulier, le soudage peut être réalisé sur une surface de moindres contraintes.

Encore plus particulièrement, le soudage peut être réalisé sur une surface d'assemblage dudit profilé avec un longeron ou un montant.

Selon l'invention, le soudage est réalisé au niveau de la première face ou de la deuxième face, ou au niveau de la face intérieur.

Le profilé selon l'invention peut être réalisé en acier, ou en inox.

Le profilé selon l'invention peut en plus être traité contre l'oxydation, en particulier par cataphorèse, par exemple en étant plongé dans un bain de cataphorèse.

Alternativement, le profilé selon l'invention peut être traité par application d'une couche de peinture, ou de tout autre produit de protection.

Alternativement, le profilé peut être plein. Dans ce cas, le profilé peut être réalisé par extrusion ou par moulage.

Suivant un autre aspect de la même invention, il est proposé une ossature pour véhicule terrestre de transport en commun de passagers, en particulier de type bus ou tram-bus, comprenant une paroi supérieure, deux parois latérales longitudinales et une paroi inférieure.

L'ossature peut comprendre un profilé selon l'invention entre la paroi inférieure et au moins une, en particulier chaque, paroi latérale longitudinale.

Un tel profilé est également appelé profilé inférieur dans la suite de la demande.

La première face du profilé inférieur peut être perpendiculaire à la paroi inférieure. Ainsi, la paroi inférieure est fixée sur ladite première face de bout et ne présente aucune partie qui vient recouvrir une autre surface/face du profilé inférieur. Une telle fixation permet de diminuer encore plus le poids de l'ossature et d'augmenter la largeur de l'habitacle.

La deuxième face du profilé inférieur peut être perpendiculaire à la paroi latérale. Ainsi, la paroi latérale est fixée sur ladite deuxième face de bout et ne présente aucune partie qui vient recouvrir une autre surface/face dudit profilé inférieur. Une telle fixation permet de diminuer encore plus le poids de l'ossature et d'augmenter la hauteur de l'habitacle.

Avantageusement, pour au moins un profilé inférieur, la paroi latérale, respectivement la paroi inférieure, peut être fixée sur ledit profilé inférieur par soudage, en particulier par soudage inox.

Alternativement, au moins une paroi peut être fixée sur le profilé longitudinal inférieur par boulonnage.

Avantageusement, l'ossature selon l'invention peut en outre comprendre un profilé, dit supérieur, entre la paroi supérieure et au moins une, en particulier chaque, paroi latérale.

Un tel profilé supérieur peut être de section fermée.

Un tel profilé supérieur peut se prolonger sensiblement sur toute la longueur de l'ossature.

De plus, un tel profilé supérieur peut comprendre :
- une première face pour la fixation de la paroi supérieure, en particulier d'un ou plusieurs longerons transversaux formant ladite paroi supérieure,
- une deuxième face pour la fixation de la paroi latérale, en particulier d'un ou plusieurs montants formant ladite paroi latérale, et
- une face, dite extérieure, se trouvant entre ladite première face et ladite deuxième face, et en utilisation, du côté extérieur par rapport à un habitacle dudit véhicule.

Suivant une caractéristique particulièrement avantageuse, la face extérieure du profilé supérieur peut comprendre au moins une surface, dite de fixation, pour la fixation d'un élément d'habillage extérieur. Une telle surface de fixation peut former un décroché dans ladite face extérieure, vers l'intérieur du profilé.

En outre, au moins l'une desdites première et deuxième faces du profilé supérieur peut être décalée par rapport à l'autre desdites faces suivant une direction perpendiculaire à ladite une face, de sorte que ladite autre face s'arrête avant ladite une face suivant ladite direction perpendiculaire. Une telle architecture permet de réaliser une fixation plus robuste au niveau de la première face.

Avantageusement, l'ossature selon l'invention peut comprendre plusieurs anneaux rigides, alignés dans le sens longitudinal de ladite ossature.

Chaque anneau rigide peut faire le tour de ladite ossature dans le sens de la largeur de ladite ossature, et en particulier autour de l'habitacle défini par l'ossature.

Chaque anneau peut être formé par :
- un montant, faisant partie de l'une des parois latérales longitudinales de ladite ossature et venant se fixer sur un premier profilé supérieur et sur un premier profilé inférieur ;
- un montant, faisant partie de l'autre des parois latérales longitudinales de ladite ossature et venant se fixer sur un deuxième profilé supérieur et sur un deuxième profilé inférieur ;
- au moins un longeron, faisant partie de la paroi supérieure et venant se fixer sur lesdits premier et deuxième profilés supérieurs ; et
- un longeron, faisant partie de la paroi inférieure et venant se fixer sur lesdits premier et deuxième profilés inférieurs.

Une telle architecture permet d'obtenir une ossature plus robuste et de conception et de fabrication simplifiées.

Suivant un autre aspect de la même invention, il est proposé un véhicule terrestre de transport en commun, en particulier sur route, comprenant une ossature selon l'invention.

Un tel véhicule peut être un véhicule hybride ou un véhicule électrique.

Un tel véhicule peut être un bus ou un tram-bus.

Dans la présente demande, un « tram-bus » désigne un véhicule électrique terrestre de transport en commun monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE la est une représentation schématique, suivant une vue en coupe, d'un exemple de réalisation non limitatif d'un profilé longitudinal inférieur selon l'invention ;
- la FIGURE 1b est une représentation schématique d'une variante du profilé de la FIGURE 1a, suivant une vue en coupe ;
- la FIGURE 2 est une représentation schématique d'une ossature selon l'invention, suivant une vue en coupe simplifiée ;
- la FIGURE 3 est une représentation schématique d'un exemple de réalisation d'une ossature selon l'invention, suivant une vue isométrique ; et
- la FIGURE 4 est une représentation schématique d'un exemple de réalisation d'un profilé longitudinal supérieur pouvant être utilisé dans une ossature selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures, les éléments communs à plusieurs figures conservent la même référence.

La FIGURE la est une représentation schématique, selon une vue en coupe, d'un exemple de réalisation non limitatif d'un profilé longitudinal selon l'invention.

Le profilé 100 représenté sur la FIGURE la est de section fermée et est utilisé dans une ossature d'un véhicule pour relier la paroi inférieure de l'ossature avec une paroi latérale longitudinale de l'ossature.

Dans la suite de la demande, le profilé 100 peut être appelé profilé inférieur.

Le profilé inférieur 100 comporte une première face 102 de fixation d'une paroi inférieure d'une ossature avec le profilé 100, une deuxième face 104 de fixation d'une paroi latérale longitudinale d'une ossature avec le profilé 100, une face extérieure 106 se trouvant du côté opposé à un habitacle de l'ossature et une face intérieure 108 se trouvant du côté dudit habitacle.

La face intérieure 108 est recourbée vers le profilé. Elle est formée par deux parties 110₁ et 110₂, perpendiculaires entre-elles. La partie 110₁ se trouve du côté de la première face 102 et est perpendiculaire à la première face 102 et parallèle à la deuxième face 104. La partie 110₂ se trouve du côté de la deuxième face 104 et est perpendiculaire à la deuxième face 104 et parallèle à la première face 102.

La première face 102 est perpendiculaire à la deuxième face 104.

De plus, la première face 102 est décalée par rapport à la deuxième face 104 suivant une direction perpendiculaire à la première face 102, de sorte que la deuxième face 104 s'arrête avant et à distance de la première face 102 suivant ladite direction perpendiculaire.

Par ailleurs, la deuxième face 104 est décalée par rapport à la première face 102 suivant une direction perpendiculaire à la deuxième face 104, de sorte que la première face 102 s'arrête avant et à distance de la deuxième face 104 suivant ladite direction perpendiculaire.

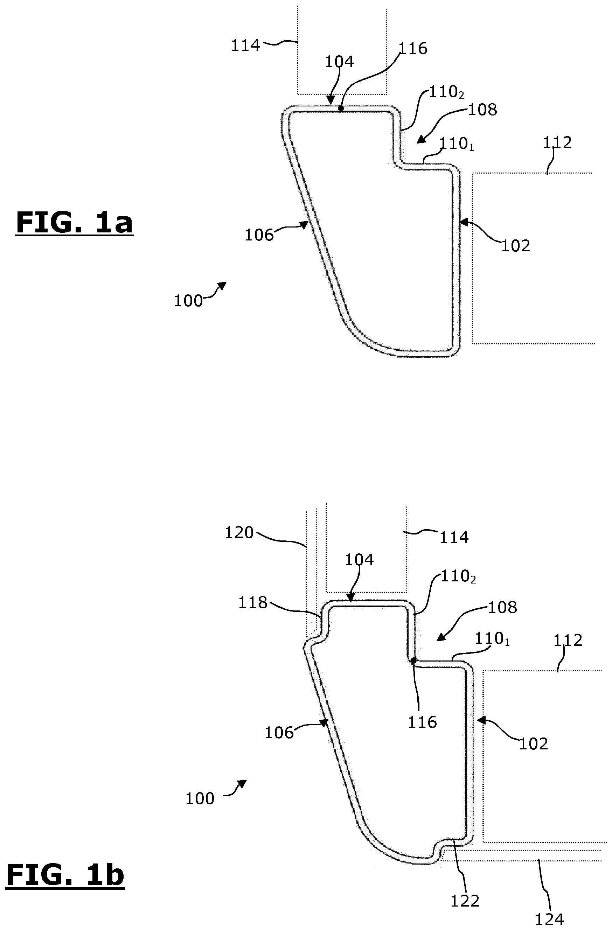

Sur la FIGURE 1a, la première face 102 est prévue pour recevoir un longeron 112 faisant partie de la paroi inférieure d'une ossature, la deuxième face 104 est prévue pour recevoir un montant 114 faisant partie de la paroi latérale d'une ossature. Le longeron 112 et le montant 114 sont représentés en pointillés.

Dans l'exemple représenté, la première face 102 est perpendiculaire à la direction définie par le longeron 112, c'est-à-dire perpendiculaire à la paroi inférieure dont fait partie le longeron 112. Ainsi, le longeron 112, et donc la paroi inférieure, est fixé au profilé 100 de bout, c'est-à-dire sans se chevaucher avec aucune partie du profilé 100.

Par ailleurs, la deuxième face 104 est perpendiculaire à la direction définie par le montant 114, c'est-à-dire perpendiculaire à la paroi latérale longitudinale dont fait partie le montant 114. Ainsi, le montant 114, et donc la paroi latérale, est fixé au profilé 100 de bout, c'est-à-dire sans se chevaucher avec aucune partie du profilé 100.

Chacun des éléments 112-114 est fixé sur le profilé 100 directement sans utilisation d'un élément de fixation additionnel. Par exemple, le longeron 112 et le montant 114 sont fixés sur le profilé 100 par soudage, en particulier inox.

Bien entendu, alternativement ou en plus, le longeron 112 et le montant 114 peuvent être fixés sur le profilé 100 par boulonnage.

Le profilé supérieur 100 représenté sur la FIGURE la est réalisé par pliage et soudage d'une feuille d'acier d'épaisseur 3mm, ou comprise entre 1mm et 5mm.

La ligne de soudage 116 est, par exemple, positionnée au niveau de la deuxième face 104. Alternativement, la ligne de soudage peut être positionnée au niveau de la première face 102 ou de la face intérieure 108.

Ainsi, les contraintes exercées sur les deux bords du profilé soudé sur le milieu d'une face sont reprises en partie par le montant 114, respectivement le longeron 112, soudé sur le profilé 100.

Le profilé 100 est traité par cataphorèse contre l'oxydation.

La FIGURE 1b est une représentation schématique d'une variante du profilé 100 de la FIGURE 1a, suivant une vue en coupe.

Sur la FIGURE 1b, la face extérieure 106 peut comporter une surface de fixation 118, dite latérale, d'un élément d'habillage 120 de la paroi latérale, du côté de la deuxième face 104. La surface de fixation latérale 118 forme un décroché dans la face extérieure 106 vers l'intérieur du profilé 100. L'élément d'habillage 120 de la paroi latérale peut être fixé sur la surface de fixation latérale 118, par exemple par collage. Ainsi, l'élément d'habillage 120 de la paroi latérale peut être fixé sur le profilé 100 sans faire saillie par rapport à la face extérieure 106.

La face extérieure 106 peut en outre comporter une surface de fixation 122, dite inférieure, d'un élément d'habillage 124 de la paroi inférieure, du côté de la première face 102. La surface de fixation inférieure 122 forme un décroché dans la face extérieure 106 vers l'intérieur du profilé 100. L'élément d'habillage 124 de la paroi inférieure peut être fixé sur la surface de fixation inférieure 122, par exemple par collage. Ainsi, l'élément d'habillage 124 de la paroi inférieure peut être fixé sur le profilé 100 sans faire saillie par rapport à la face extérieure 106.

De plus, dans la variante représentée sur la FIGURE 1b, la ligne de soudage 116 se trouve sur la face intérieure 108 du profilé 100. Alternativement, la ligne de soudage peut être positionnée sur une des surfaces de fixation 118, respectivement 122, de sorte qu'elle est cachée par l'élément d'habillage 120, respectivement 124.

Dans les exemples décrits sur les FIGURES la et 1b, le profilé 100 est utilisé pour réaliser plusieurs fonctions, sans utilisation de dispositif de fixation additionnel, à savoir les fonctions suivantes :
- fixation de la paroi inférieure,
- fixation de la paroi latérale longitudinale,
- fixation d'un élément d'habillage extérieur de la paroi latérale,
- fixation d'un élément d'habillage extérieur de la paroi inférieure,
- augmentation de la largeur de l'habitacle, et
- augmentation de la hauteur de l'habitacle.

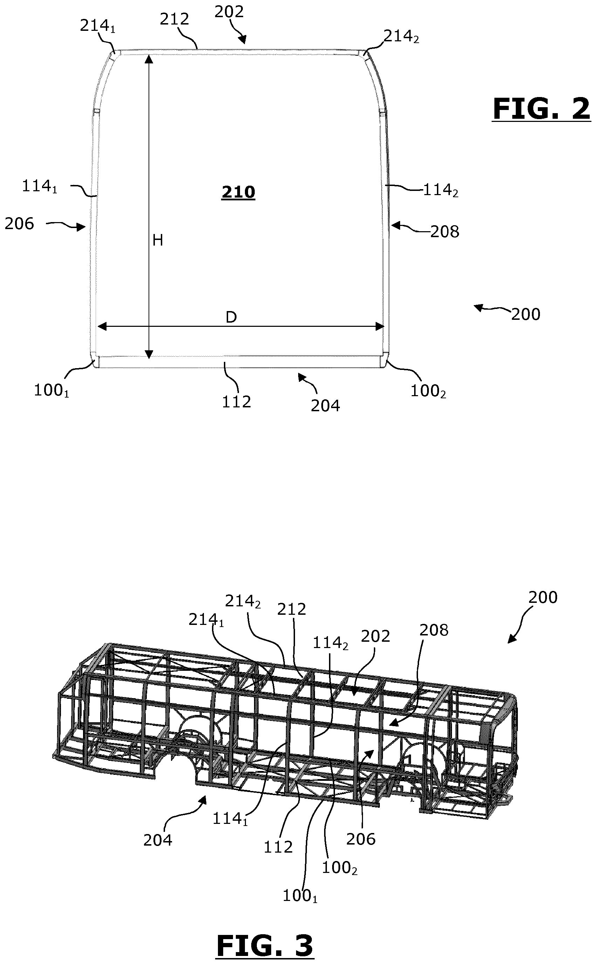

La FIGURE 2 est une représentation schématique, selon une vue en coupe simplifiée, d'un exemple de réalisation non limitatif d'une ossature selon l'invention.

La FIGURE 3 est une représentation schématique, selon une vue isométrique, d'un exemple de réalisation non limitatif d'une ossature selon l'invention, par exemple de l'ossature de la FIGURE 2.

En référence à la FIGURE 2, l'ossature 200 comprend :
- une paroi supérieure 202,
- une paroi inférieure 204 comprenant le longeron 112,
- une première paroi latérale longitudinale 206 sensiblement verticale, rejoignant la paroi supérieure 202 et la paroi inférieure 204, et comprenant un montant 114₁, et
- une deuxième paroi latérale longitudinale 208 sensiblement verticale, rejoignant la paroi supérieure 202 et la paroi inférieure 204, et comprenant un montant 114₂.

Les parois 202-208 définissent un habitacle 210, en particulier fermé.

L'ossature 200 comprend un premier profilé longitudinal inférieur 100₁, sur lequel sont fixées la paroi latérale 206 et la paroi inférieure 204, et un deuxième profilé longitudinal inférieur 100₂, sur lequel sont fixées la paroi latérale 208 et la paroi inférieure 204.

Chacun des profilés inférieurs 100₁ et 100₂ s'étend sur toute la longueur de l'ossature 200, excepté au niveau des passages de roues.

L'utilisation des profilés longitudinaux inférieurs 100₁ et 100₂ permet d'optimiser :
- d'une part, la largeur « D » au sol dans l'habitacle 210 entre les parois latérales 206 et 208 ; et
- d'autre part, la hauteur « H » dans l'habitacle 210, définie entre la paroi supérieure 202 et la paroi inférieure 204.

La paroi supérieure 202 peut être formée par plusieurs longerons 212.

L'ossature 200 comprend en outre un premier profilé longitudinal supérieur 214₁, sur lequel sont fixées la paroi latérale 206 et la paroi supérieure 202, et un deuxième profilé longitudinal supérieur 214₂, sur lequel sont fixées la paroi latérale 208 et la paroi supérieure 202.

Chacun des profilés supérieurs 214₁ et 214₂ s'étend sur toute la longueur de l'ossature 200.

En outre, tel que visible sur les FIGURES 2 et 3, les profilés supérieurs 214₁-214₂ et inférieurs 100₁-100₂ permettent de concevoir une ossature 200 comportant plusieurs anneaux rigides. Chaque anneau rigide fait le tour de ladite ossature 200 dans le sens de la largeur, autour de l'habitacle 210.

Chaque anneau rigide est formé par :
- le montant 114₁, faisant partie de la paroi latérale longitudinale 206 de l'ossature 200 et venant se fixer sur le profilé supérieur 214₁ et sur le profilé inférieur 100₁ ;
- le montant 114₂, faisant partie de la paroi latérale longitudinale 208 de l'ossature 200 et venant se fixer sur le profilé supérieur 214₂ et sur le profilé inférieur 100₂ ;
- le longeron 212, faisant partie de la paroi supérieure 202 et venant se fixer sur les profilés supérieurs 214₁ et 214₂ ; et
- le longeron 112, faisant partie de la paroi inférieure 204 et venant se fixer sur les profilés inférieurs 100₁ et 100₂.

Les anneaux peuvent être disposés à égale distance les uns des autres ou à des distances variables.

Une telle architecture d'ossature permet d'obtenir une ossature plus rigide, de conception et de fabrication simplifiées.

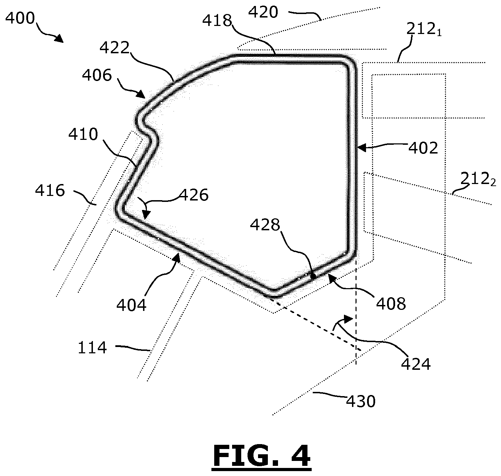

La FIGURE 4 est une représentation schématique, selon une vue en coupe, d'un exemple de réalisation non limitatif d'un profilé supérieur pouvant être utilisé dans une ossature selon l'invention, en particulier dans l'ossature 200 des FIGURES 2 et 3, en combinaison avec un profilé inférieur selon l'invention, et en particulier avec le profilé 100 des FIGURES la et 1b.

Le profilé supérieur 400 représenté sur la FIGURE 4 peut être l'un quelconque des profilés supérieurs 214₁ et 214₂ décrits plus haut.

Le profilé supérieur 400 représenté sur la FIGURE 4 est de section fermée. Il est utilisé pour relier la paroi supérieure 202 de l'ossature 200 avec une paroi latérale longitudinale 206 ou 208 de l'ossature 200.

Le profilé supérieur 400 comporte une première face 402 de fixation de la paroi supérieure 202, une deuxième face 404 de fixation d'une paroi latérale longitudinale 206 ou 208, une face extérieure 406 se trouvant du côté opposé à l'habitacle 210 et une face intérieure 408 se trouvant du côté dudit habitacle 210.

La face extérieure 406 comporte une surface 410 de fixation d'un élément d'habillage de la paroi latérale, tel que par exemple un élément vitré. La surface de fixation 410 de l'élément d'habillage forme un décroché dans la face extérieure 406, vers l'intérieur du profilé 400, de sorte que l'élément d'habillage, une fois fixé sur la face extérieure, se trouve en continuité de la face extérieure 406 ou ne fasse pas saillie de la face extérieure 406.

Sur la FIGURE 4, la première face 402 est prévue pour recevoir un longeron 212₁ faisant partie de la paroi supérieure, la deuxième face 404 est prévue pour recevoir un montant 114 et la surface de fixation 410 est prévue pour recevoir un élément d'habillage extérieur vitré 416, représentés tous en pointillés.

La première face 402 peut, optionnellement, servir à la fixation d'un deuxième longeron 212₂, disposé en dessous du longeron 212₁ et utilisé pour former un logement dans la paroi supérieure ou en dessous de la paroi supérieure. Un tel logement peut être utilisé pour y loger au moins un module de stockage d'énergie électrique, un dispositif de traitement d'air, etc.

Le profilé 400 peut comprendre au niveau de sa face extérieure 406 une surface 418 de fixation d'un élément d'habillage 420 de la paroi supérieure, tel qu'un élément de capotage ou une paroi d'étanchéité.

Le profilé 400 peut en outre comprendre, au niveau de sa face extérieure 406, une surface 422, non recouverte par un élément d'habillage et prévue pour former une partie de la surface extérieure du véhicule, en particulier au niveau du coin supérieur du véhicule. Ainsi, il n'est pas nécessaire d'utiliser un élément d'habillage extérieur pour former la surface extérieure du véhicule au niveau de cette zone, la surface 422 étant alors une surface visible de l'extérieur du véhicule (partie de la carrosserie/peau du véhicule).

Chacun des éléments 212₁, 212₂, 114 et 416 est fixé sur le profilé 400 directement sans utilisation d'un élément de fixation additionnel. Par exemple, les longerons 212₁-212₂ et le montant 114 sont fixés sur le profilé 400 par soudage, en particulier inox, et l'élément d'habillage 416 est fixé sur la surface de fixation 410 par collage.

Bien entendu, alternativement ou en plus, les longerons 212₁-212₂ et le montant 114 peuvent être fixés sur le profilé 400 par boulonnage.

L'élément d'habillage 420 peut être fixé sur le profilé par collage, par soudage ou par vissage, etc.

Dans l'exemple représenté, la première face 402 est perpendiculaire à la direction définie par le longeron 212₁, c'est-à-dire perpendiculaire à la paroi supérieure dont fait partie le longeron 212₁. Ainsi, le longeron 212₁, et donc la paroi supérieure, est fixé au profilé 400 de bout, c'est-à-dire sans se chevaucher avec aucune partie du profilé supérieur 400.

De plus, la première face 402 est décalée par rapport à la deuxième face 404 suivant une direction perpendiculaire à la première face 402, de sorte que la deuxième face 404 s'arrête avant et à distance de la première face 402 suivant ladite direction perpendiculaire.

Par ailleurs, la deuxième face 404 est perpendiculaire à la direction définie par le montant 114, c'est-à-dire perpendiculaire à la paroi latérale longitudinale dont fait partie le montant 114. Ainsi, le montant 114, et donc la paroi latérale, est fixé au profilé 400 de bout, c'est-à-dire sans se chevaucher avec aucune partie du profilé 400.

De plus, la deuxième face 404 est décalée par rapport à la première face 402 suivant une direction perpendiculaire à la deuxième face 404, de sorte que la première face 402 s'arrête avant et à distance de la deuxième face 404 suivant ladite direction perpendiculaire.

La première face 402 et la deuxième face 404 forment entre-elles un angle 424 égal à 60°, ou compris entre 55° et 65°, de sorte que la paroi supérieure et la paroi latérale longitudinale forment entre-elles un angle supérieur à 90°.

La surface de fixation 410 de l'élément d'habillage latéral 416 et la deuxième face 404 forment entre-eux un angle 426 égal à 90°, ou compris entre 85° et 95°.

De plus, la surface 422, prévue pour ne pas être recouverte par un élément d'habillage et former la surface extérieure du véhicule au niveau d'un coin supérieur dudit véhicule, est sensiblement arrondie ou circulaire de sorte à obtenir une continuité arrondie au niveau d'un coin supérieur du véhicule.

Optionnellement, la deuxième face 404 et/ou la face intérieure 408, du profilé 400 peu(ven)t être utilisée(s) comme face(s) d'appui pour une pièce de renfort 430 (représentée en pointillés sur les figures), appelé jambe de renfort, venant renforcer la tenue mécanique de l'ossature. Une telle jambe de renfort 430 peut être fixée au montant vertical 114, et éventuellement au(x) longeron(s) 212₁ et/ou 212₂.

Le profilé supérieur 400 représenté sur la FIGURE 4 est réalisé par pliage et soudage d'une feuille d'acier d'épaisseur 3mm, ou comprise entre 1mm et 5mm.

La ligne de soudage 428 est positionnée, de préférence, au niveau de la face intérieure 408, sur laquelle aucune paroi n'est fixée.

Alternativement, la ligne de soudage peut être positionnée au niveau de la surface de fixation 410, de sorte qu'elle est cachée sous l'élément d'habillage extérieur 416. La ligne de soudage peut aussi être positionnée sur la première face 402 ou encore sur la deuxième face 404. Plus généralement, la ligne de soudage est de préférence positionnée sur une surface/face non visible, de moindres contraintes.

Le profilé 400 est, de préférence, traité par cataphorèse contre l'oxydation.

Ainsi, dans l'exemple décrit, le profilé 400 est utilisé pour réaliser plusieurs fonctions, sans utilisation de dispositif de fixation additionnel, à savoir les fonctions suivantes :
- fixation de la paroi supérieure,
- fixation de la paroi latérale longitudinale,
- fixation d'un élément d'habillage extérieur de la paroi latérale,
- fixation d'un élément d'habillage extérieur de la paroi supérieure,
- fixation d'un élément définissant un logement dans la paroi supérieure,
- constitution d'une partie visible de la face extérieure du véhicule, autrement dit d'une partie de l'habillage extérieur du véhicule, et
- support pour une jambe de renfort de l'ossature.

Bien entendu, l'invention n'est pas limitée aux exemples qui viennent d'être décrits.

## Revendications

1. Profilé (100) pour la fixation d'une paroi inférieure (204) avec une paroi latérale longitudinale (206, 208) d'une ossature (200) d'un véhicule terrestre de transport en commun de passagers, en particulier de type bus ou tram-bus, de section fermée, ledit profilé (100) comprenant :
- une première face (102) pour la fixation de la paroi inférieure (204), et
- une deuxième face (104) pour la fixation de la paroi latérale (206, 208) ;
l'une (102, 104) desdites faces étant décalée par rapport à l'autre (104, 102) desdites faces suivant une direction perpendiculaire à ladite une face (102, 104), de sorte que ladite autre face (104, 102) s'arrête avant, et à distance de, ladite une face (102, 104) suivant ladite direction perpendiculaire ;
**caractérisé en ce qu'**il est réalisé par pliage et soudage d'une unique feuille de tôle, le soudage étant réalisé au niveau de ladite première face (102), ou de ladite deuxième face (104), ou d'une face (108), dite intérieure, se trouvant entre ladite première face (102) et ladite deuxième face (104), et en utilisation, du côté d'un habitacle (210) du véhicule.

2. Profilé (100) selon la revendication précédente, **caractérisé en ce que** :
- la première face (102) est décalée par rapport à la deuxième face (104) suivant une direction perpendiculaire à ladite première face (102), de sorte que la deuxième face (104) s'arrête avant, et à distance de, ladite première face (102) suivant ladite direction perpendiculaire ; et
- la deuxième face (104) est décalée par rapport à la première face (102) suivant une direction perpendiculaire à ladite deuxième face (104), de sorte que la première face (102) s'arrête avant, et à distance de, ladite deuxième face (104) suivant ladite direction perpendiculaire.

3. Profilé (100) selon l'une quelconque des revendications précédentes, **caractérisé en ce que** la première face (102) est sensiblement perpendiculaire à la deuxième face (104).

4. Profilé (100) selon l'une quelconque des revendications précédentes, **caractérisé en ce que** ladite face intérieure (108) est recourbée vers l'intérieur dudit profilé (100).

5. Profilé (100) selon la revendication précédente, **caractérisé en ce que** la face intérieure (108) rejoint la première face (102) suivant un angle compris entre 85° et 90°, et en particulier égal à 90°, par rapport à ladite première face (102).

6. Profilé (100) selon l'une quelconque des revendications 4 et 5, **caractérisé en ce que** la face intérieure (108) rejoint la deuxième face (104) suivant un angle compris entre 85° et 90°, et en particulier égal à 90°, par rapport à ladite deuxième face (104).

7. Profilé (100) selon l'une quelconque des revendications 4 à 6, **caractérisé en ce que** la face intérieure (108) peut comprendre deux parties (110₁, 110₂) perpendiculaires entre-elles, en particulier formant entre-elles un « L ».

8. Profilé (100) selon l'une quelconque des revendications précédentes, **caractérisé en ce qu'**il comprend une face (106), dite extérieure, se trouvant entre ladite première face (102) et ladite deuxième face (104), et en utilisation, du côté extérieur par rapport à un habitacle (210) du véhicule, ladite face extérieure (106) formant :
- avec la première face (102), un angle supérieur à 95°, en particulier compris entre 100° et 110°, plus particulièrement égal à 105° ; et/ou
- avec la deuxième face (104), un angle inférieur à 85°, en particulier compris entre 70° et 80°, plus particulièrement égal à 75°.

9. Profilé (100) selon l'une quelconque des revendications précédentes, **caractérisé en ce qu'**il comporte une surface de fixation (118), dite latérale, adjacente à la deuxième face (104) et prévue pour fixer un élément d'habillage (120) de la paroi latérale, formant un décroché dans une face extérieure (106) dudit profilé (100) vers l'intérieur dudit profilé (100).

10. Profilé (100) selon l'une quelconque des revendications précédentes, **caractérisé en ce qu'**il comporte une surface de fixation (122), dite inférieure, adjacente à la première face (102) et prévue pour fixer un élément d'habillage (124) de la paroi inférieure, formant un décroché dans une face extérieure (106) dudit profilé (100) vers l'intérieur dudit profilé (100).

11. Profilé (100) selon l'une quelconque des revendications précédentes, **caractérisé en ce que** le soudage est réalisé au niveau de la deuxième face (104).

12. Profilé (100) selon l'une quelconque des revendications précédentes, **caractérisé en ce qu'**il est réalisé en acier.

13. Profilé (100) selon l'une quelconque des revendications précédentes, **caractérisé en ce qu'**il est traité contre l'oxydation, en particulier par cataphorèse.

14. Ossature (200) pour véhicule terrestre de transport en commun de passagers, en particulier de type bus ou tram-bus, comprenant une paroi supérieure (202), deux parois latérales longitudinales (206, 208) et une paroi inférieure (204), **caractérisée en ce qu'**elle comprend un profilé (100₁, 100₂), dit inférieur, selon l'une quelconque des revendications précédentes, entre ladite paroi inférieure (204) et au moins une, en particulier chaque, paroi latérale longitudinale (206, 208).

15. Ossature (200) selon la revendication précédente, **caractérisée en ce que** la première face (102), respectivement la deuxième face (104), du profilé inférieur (100₁, 100₂) est perpendiculaire à la paroi inférieure (204), respectivement à la paroi latérale (206, 208), de ladite ossature (200).

16. Ossature (200) selon l'une quelconque des revendications 14 et 15, **caractérisée en ce que** la paroi latérale (206, 208), respectivement la paroi inférieure (204), est fixée de bout sur le profilé longitudinal inférieur (100₁, 100₂) par soudage.

17. Ossature (200) selon l'une quelconque des revendications 14 à 16, **caractérisée en ce qu'**elle comprend en outre un profilé (214₁, 214₂, 400), dit supérieur, entre la paroi supérieure (202) et au moins une, en particulier chaque, paroi latérale (204, 206) de l'ossature (200), de section fermée, ledit profilé supérieur (214₁, 214₂, 400) comprenant :
- une première face (402) pour la fixation de la paroi supérieure (202),
- une deuxième face (404) pour la fixation de la paroi latérale (206, 208),
- une face (406), dite extérieure, se trouvant entre ladite première face (402) et ladite deuxième face (404), et en utilisation, du côté extérieur par rapport à un habitacle (210) du véhicule ;
ladite face extérieure (406) comprenant au moins une surface (410), dite de fixation, pour la fixation d'un élément d'habillage extérieur (416), formant un décroché dans ladite face extérieure (416), vers l'intérieur dudit profilé supérieur (214₁, 214₂, 400).

18. Ossature (200) selon l'une quelconque des revendications 14 à 17, **caractérisée en ce qu'**elle comprend plusieurs anneaux rigides, alignés dans le sens longitudinal de ladite ossature (200), chaque anneau rigide faisant le tour de ladite ossature (200), dans le sens de la largeur de ladite ossature (200), et étant formé par :
- un montant (114₁), faisant partie de l'une (206) des parois latérales longitudinales de ladite ossature (200) et venant se fixer sur un premier profilé supérieur (214₁) et sur un premier profilé inférieur (100₁) ;
- un montant (114₂), faisant partie de l'autre (208) des parois latérales longitudinales de ladite ossature (200) et venant se fixer sur un deuxième profilé supérieur (214₂) et sur un deuxième profilé inférieur (100₂) ;
- au moins un longeron (212), faisant partie de la paroi supérieure (202) et venant se fixer sur lesdits premier et deuxième profilés supérieurs (214₁, 214₂) ; et
- un longeron (112), faisant partie de la paroi inférieure (204) et venant se fixer sur lesdits premier et deuxième profilés inférieurs (100₁, 100₂).

19. Véhicule terrestre de transport en commun de passagers comprenant une ossature (200) selon l'une quelconque des revendications 14 à 18.

20. Véhicule selon la revendication précédente, **caractérisé en ce qu'**il s'agit d'un véhicule électrique, en particulier d'un bus, ou tram-bus, électrique.

## Patentansprüche

1. Profil (100) zur Befestigung einer unteren Wand (204) mit einer Längsseitenwand (206, 208) eines Tragrahmens (200) eines Landfahrzeugs des öffentlichen Personenverkehrs, insbesondere vom Typ Bus oder Tram-Bus, mit geschlossenem Querschnitt, wobei das Profil (100) umfasst:
- eine erste Seite (102) zum Befestigen der unteren Wand (204), und
- eine zweite Seite (104) zum Befestigen der Seitenwand (206, 208),
wobei die eine (102, 104) der Seiten gegenüber der anderen (104, 102) der Seiten in einer Richtung senkrecht zu der einen Seite (102, 104) versetzt ist, so dass die andere Seite (104, 102) in der senkrechten Richtung vor und im Abstand von der einen Seite (102, 104) aufhört,
**dadurch gekennzeichnet, dass** es durch Biegen und Schweißen einer einzelnen Blechtafel hergestellt wird, wobei das Schweißen im Bereich der ersten Seite (102), oder der zweiten Fläche (104), oder einer sogenannten inneren Seite (108) durchgeführt wird, die sich zwischen der ersten Seite (102) und der zweiten Seite (104) und im Gebrauch auf der Seite einer Fahrgastzelle (210) des Fahrzeugs befindet.

2. Profil (100) nach dem vorhergehenden Anspruch, **dadurch gekennzeichnet, dass**:
- die erste Seite (102) gegenüber der zweiten Seite (104) in einer Richtung senkrecht zu der ersten Seite (102) versetzt ist, so dass die zweite Seite (104) in der senkrechten Richtung vor und im Abstand von der ersten Seite (102) aufhört; und
- die zweite Seite (104) gegenüber der ersten Seite (102) in einer Richtung senkrecht zu der zweiten Seite (104) versetzt ist, so dass die erste Seite (102) in der senkrechten Richtung vor und im Abstand von der zweiten Seite (104) aufhört.

3. Profil (100) nach einem der vorhergehenden Ansprüche, **dadurch gekennzeichnet, dass** die erste Seite (102) zu der zweiten Seite (104) im Wesentlichen senkrecht verläuft.

4. Profil (100) nach einem der vorhergehenden Ansprüche, **dadurch gekennzeichnet, dass** die innere Seite (108) zur Innenseite des Profils (100) gebogen ist.

5. Profil (100) nach dem vorhergehenden Anspruch, **dadurch gekennzeichnet, dass** sich die innere Seite (108) unter einem Winkel zwischen 85° und 90°, und insbesondere gleich 90°, gegenüber der ersten Seite (102) an die erste Seite (102) anschließt.

6. Profil (100) nach einem der Ansprüche 4 und 5, **dadurch gekennzeichnet, dass** sich die innere Seite (108) unter einem Winkel zwischen 85° und 90°, und insbesondere gleich 90°, gegenüber der zweiten Seite (104) an die zweite Seite (104) anschließt.

7. Profil (100) nach einem der Ansprüche 4 bis 6, **dadurch gekennzeichnet, dass** die innere Seite (108) zwei zueinander senkrechte Teile (110₁, 110₂) aufweisen kann, die insbesondere ein « L » miteinander bilden.

8. Profil (100) nach einem der vorhergehenden Ansprüche, **dadurch gekennzeichnet, dass** es eine sogenannte äußere Seite (106) aufweist, die sich zwischen der ersten Seite (102) und der zweiten Seite (104) und in Gebrauch auf der Außenseite in Bezug auf eine Fahrgastzelle (210) des Fahrzeugs befindet, wobei die äußere Seite (106):
- mit der ersten Seite (102) einen Winkel größer als 95°, insbesondere zwischen 100° und 110°, weiterhin insbesondere gleich 105° bildet; und/oder
- mit der zweiten Seite (104) einen Winkel kleiner als 85°, insbesondere zwischen 70° und 80°, weiterhin insbesondere gleich 75° bildet.

9. Profil (100) nach einem der vorhergehenden Ansprüche, **dadurch gekennzeichnet, dass** es eine sogenannte seitliche Befestigungsfläche (118) aufweist, welche an die zweite Seite (104) angrenzt und vorgesehen ist, um ein Verkleidungselement (120) der Seitenwand zu befestigen, und welche einen Absatz in einer äußeren Seite (106) des Profils (100) zur Innenseite des Profils (100) bildet.

10. Profil (100) nach einem der vorhergehenden Ansprüche, **dadurch gekennzeichnet, dass** es eine sogenannte untere Befestigungsfläche (122) aufweist, welche an die erste Seite (102) angrenzt und vorgesehen ist, um ein Verkleidungselement (124) der unteren Wand zu befestigen, und welche einen Absatz in einer äußeren Seite (106) des Profils (100) zur Innenseite des Profils (100) bildet.

11. Profil (100) nach einem der vorhergehenden Ansprüche, **dadurch gekennzeichnet, dass** das Verschweißen im Bereich der zweiten Seite (104) erfolgt.

12. Profil (100) nach einem der vorhergehenden Ansprüche, **dadurch gekennzeichnet, dass** es aus Stahl besteht.

13. Profil (100) nach einem der vorhergehenden Ansprüche, **dadurch gekennzeichnet, dass** es gegen Oxidation, insbesondere durch Kataphorese behandelt ist.

14. Tragrahmen (200) für ein Landfahrzeug des öffentlichen Personenverkehrs, insbesondere vom Typ Bus oder Tram-Bus, mit einer oberen Wand (202), zwei Längsseitenwänden (206, 208) und einer unteren Wand (204), **dadurch gekennzeichnet, dass** er ein sogenanntes unteres Profil (100₁, 100₂) nach einem der vorhergehenden Ansprüche zwischen der unteren Wand (204) und wenigstens einer, insbesondere jeder Längsseitenwand (206, 208) umfasst.

15. Tragrahmen (200) nach dem vorhergehenden Anspruch, **dadurch gekennzeichnet, dass** die erste Seite (102) bzw. die zweite Seite (104) des unteren Profils (100₁, 100₂) zu der unteren Wand (204) bzw. der Seitenwand (206, 208) des Tragrahmens (200) senkrecht verläuft.

16. Tragrahmen (200) nach einem der Ansprüche 14 und 15, **dadurch gekennzeichnet, dass** die Seitenwand (206, 208) bzw. die untere Wand (204) an dem unteren Längsprofil (100₁, 100₂ stumpf festgeschweißt ist.

17. Tragrahmen (200) nach einem der Ansprüche 14 bis 16, **dadurch gekennzeichnet, dass** er ferner ein sogenanntes oberes Profil (214₁, 214₂, 400) zwischen der oberen Wand (202) und wenigstens einer, insbesondere jeder, Seitenwand (204, 206) des Tragrahmens (200), mit geschlossenem Querschnitt umfasst, wobei das obere Profil (214₁, 214₂, 400) umfasst:
- eine erste Seite (402) zum Befestigen der oberen Wand (202),
- eine zweite Seite (404) zum Befestigen der Seitenwand (206, 208),
- eine sogenannte äußere Seite (406), die sich zwischen der ersten Seite (402) und der zweiten Seite (404) sowie im Gebrauch auf der Außenseite in Bezug auf eine Fahrgastzelle (210) des Fahrzeugs befindet,
wobei die äußere Seite (406) wenigstens eine sogenannte Befestigungsfläche (410) zum Befestigen eines äußeren Verkleidungselements (416) umfasst, die in der äußeren Seite (416) zur Innenseite des oberen Profils (214₁, 214₂, 400) einen Absatz bildet.

18. Tragrahmen (200) nach einem der Ansprüche 14 bis 17, **dadurch gekennzeichnet, dass** er mehrere starre Ringe umfasst, die in Längsrichtung des Tragrahmens (200) ausgerichtet sind, wobei jeder starre Ring den Tragrahmen (200) in der Richtung der Breite des Tragrahmens (200) umgibt und gebildet ist durch:
- einen Pfosten (114₁), der zu einer (206) der Längsseitenwände des Tragrahmens (200) gehört und an einem ersten oberen Profil (214₁) und an einem ersten unteren Profil (100₁) befestigt wird;
- einen Pfosten (114₂), der zu der anderen (208) der Längsseitenwände des Tragrahmens (200) gehört und an einem zweiten oberen Profil (214₂) und an einem zweiten unteren Profil (100₂) befestigt wird;
- wenigstens einen Längsträger (212), der zu der oberen Wand (202) gehört und an dem ersten und dem zweiten oberen Profil (214₁, 214₂) befestigt wird; und
- einen Längsträger (112), der zu der unteren Wand (204) gehört und an dem ersten und dem zweiten unteren Profil (100₁, 100₂) befestigt wird.

19. Landfahrzeug des öffentlichen Personenverkehrs, umfassend einen Tragrahmen (200) nach einem der Ansprüche 14 bis 18.

20. Fahrzeug nach dem vorhergehenden Anspruch, **dadurch gekennzeichnet, dass** es sich um ein elektrisches Fahrzeug, insbesondere um einen elektrischen Bus oder Tram-Bus handelt.

## Claims

1. A profile (100) for fastening a lower panel (204) to a longitudinal side panel (206,208) of a body structure (200) of a passenger public transport land vehicle, in particular of the bus or tyred tram type, having a closed cross-section, said profile (100) comprising:
- a first face (102) for fastening the lower panel (204), and
- a second face (104) for fastening the side panel (206,208);
one (102,104) of said faces being offset with respect to the other (104,102) of said faces in a direction perpendicular to said one face (102,104), so that said other face (104,102) stops before and at a distance from said one face (102,104) in said perpendicular direction;
**characterized in that** it is carried out by folding and welding a single sheet of metal, the welding being carried out at the level of said first face (102), or of said second face (104), or of a face (108), called inner face, located between said first face (102) and said second face (104), and in use, on the side of a passenger compartment (210) of the vehicle.

2. The profile (100) according to the preceding claim, **characterized in that**:
- the first face (102) is offset with respect to the second face (104) in a direction perpendicular to said first face (102), so that the second face (104) stops before and at a distance from said first face (102) in said perpendicular direction; and
- the second face (104) is offset with respect to the first face (102) in a direction perpendicular to said second face (104), so that the first face (102) stops before and at a distance from said second face (104) in said perpendicular direction.

3. The profile (100) according to any one of the preceding claims, **characterized in that** the first face (102) is substantially perpendicular to the second face (104).

4. The profile (100) according to any one of the preceding claims, **characterized in that** said inner face (108) is curved towards the inside of said profile (100).

5. The profile (100) according to the preceding claim, **characterized in that** the inner face (108) meets the first face (102) at an angle comprised between 85° and 90°, and in particular equal to 90°, with respect to said first face (102).

6. The profile (100) according to any one of claims 4 and 5, **characterized in that** the inner face (108) meets the second face (104) at an angle comprised between 85° and 90°, and in particular equal to 90°, with respect to said second face (104).

7. The profile (100) according to any one of claims 4 to 6, **characterized in that** the inner face (108) can comprise two parts (110₁,110₂) perpendicular to each other, in particular together forming an "L".

8. The profile (100) according to any one of the preceding claims, **characterized in that** it comprises a face (106), called outer face, located between said first face (102) and said second face (104), and in use, on the outer side with respect to a passenger compartment (210) of the vehicle, said outer face (106) forming:
- with the first face (102), an angle greater than 95°, in particular comprised between 100° and 110°, more particularly equal to 105°; and/or
- with the second face (104), an angle less than 85°, in particular comprised between 70° and 80°, more particularly equal to 75°.

9. The profile (100) according to any one of the preceding claims, **characterized in that** it comprises a fastening surface (118), called side fastening surface, adjacent to the second face (104) and provided for fastening a trim element (120) of the side panel, forming a recess in an outer face (106) of said profile (100) towards the inside of said profile (100).

10. The profile (100) according to any one of the preceding claims, **characterized in that** it comprises a fastening surface (122), called lower fastening surface, adjacent to the first face (102) and provided for fastening a trim element (124) of the lower panel, forming a recess in an outer face (106) of said profile (100) towards the inside of said profile (100).

11. The profile (100) according to any one of the preceding claims, **characterized in that** the welding is carried out at the second face (104).

12. The profile (100) according to any one of the preceding claims, **characterized in that** it is made from steel.

13. The profile (100) according to any one of the preceding claims, **characterized in that** it is treated against oxidation, in particular by cataphoresis.

14. A body structure (200) for a passenger public transport land vehicle, in particular of the bus or tyred tram type, comprising an upper panel (202), two longitudinal side panels (206,208) and a lower panel (204), **characterized in that** it comprises a profile (100₁,100₂), called lower profile, according to any one of the preceding claims, between said lower panel (204) and at least one, in particular each, longitudinal side panel (206,208).

15. The body structure (200) according to the preceding claim, **characterized in that** the first face (102), respectively the second face (104), of the lower profile (100₁,100₂) is perpendicular to the lower panel (204), respectively the side panel (206,208), of said body structure (200).

16. The body structure (200) according to any one of claims 14 and 15, **characterized in that** the side panel (206,208), respectively the lower panel (204), is fastened at the end to the lower longitudinal profile (100₁, 100₂), by welding.

17. The body structure (200) according to any one of claims 14 to 16, **characterized in that** it comprises in addition a profile (214₁,214₂,400), called upper profile, between the upper panel (202) and at least one, in particular each, side panel (204,206) of the body structure (200), having a closed cross-section, said upper profile (214₁,214₂,400) comprising:
- a first face (402) for fastening the upper panel (202),
- a second face (404) for fastening the side panel (206, 208),
- a face (406) called outer face, located between said first face (402) and said second face (404), and in use, on the outer side with respect to a passenger compartment (210) of the vehicle;
said outer face (406) comprising at least one surface (410), called fastening surface, for fastening an outer trim element (416), forming a recess in said outer face (406) towards the inside of said upper profile (214₁,214₂,400).

18. The body structure (200) according to any one of claims 14 to 17, **characterized in that** it comprises several rigid rings, aligned in the longitudinal direction of said body structure (200), each rigid ring encircling said body structure (200) in the widthwise direction of said body structure (200), and being formed of:
- an upright (114₁) forming part of one (206) of the longitudinal side panels of said body structure (200) and being fastened onto a first upper profile (214₁) and onto a first lower profile (100₁);
- an upright (114₂) forming part of the other (208) of the longitudinal side panels of said body structure (200) and being fastened onto a second upper profile (214₂) and onto a second lower profile (100₂);
- at least one longitudinal member (212) forming part of the upper panel (202) and being fastened onto said first and second upper profiles (214₁, 2142); and
- a longitudinal member (112) forming part of the lower panel (204) and being fastened onto said first and second lower profiles (100₁, 100₂).

19. A land vehicle for passenger public transport comprising a body structure (200) according to any one of claims 14 to 18.

20. The vehicle according to the preceding claim, **characterized in that** it relates to an electric vehicle, in particular an electric bus or tyred tram.
